# DEMANDE DE BREVET EUROPEEN

(11) **EP 0 527 695 A1**
(43) Date de publication de la demande: **17.02.1993**
(21) Numéro de dépôt: 92420274.0
(22) Date de dépôt: 12.08.1992
(51) Int. Cl.: B66C 1/12, F16G 11/14, F16G 11/04

(54) **Elingue à usage unique pour le fardelage et la manipulation d'éléments allongés**

(30) Priorité: 14.08.1991 FR 9110462
(71) Demandeur: Etablissements A. Mure, F-69003 Lyon (FR)
(72) Inventeur: Peron, Yvon, F-69007 Lyon (FR)
(74) Mandataire: Maureau, Philippe

(57) **Abrégé**

Cette élingue comprend :
- un câble (2), à une extrémité duquel est ménagée une boucle (3), et à l'autre extrémité duquel est fixé une pièce d'insertion (5),
- et une pièce de verrouillage (6) comportant un trou traversant (7) ou une gorge permettant son engagement sur le câble (2) et son libre coulissement sur celui-ci, et une encoche (8) qui, débouchant, d'une part, dans l'une de ses faces latérales sur toute la largeur ou longueur de celle-ci , par une fente (9) de largeur au moins égale au diamètre du câble (2) et, d'autre part, dans le trou traversant (7) ou dans la gorge, comporte une section correspondant sensiblement à la section de la pièce d'insertion (5) fixée à une extrémité du câble.

Application au fardelage et à la manutention de barres métalliques ou à l'assemblage de barres métalliques.

## Description

La présente invention a pour objet une élingue à usage unique pour le fardelage et la manipulation d'éléments allongés.

Les éléments allongés dont il s'agit peuvent être constitués notamment par des barres, des tubes, ou des fers plats. De tels éléments sont souvent regroupés en vue de leur transport et de leur manutention, sous forme de fardeau. Les éléments constitutifs du fardeau sont liés les uns aux autres par des éléments en fil doux qui les entourent, par points, puis qui sont chacun refermés sur eux-mêmes par torsion. La fonction de ces liens est simplement d'assurer la solidarisation des éléments constitutifs d'un fardeau. Toutefois, il a été constaté que dans de nombreux cas, ces liens étaient également utilisés pour réaliser la manutention des fardeaux, en infraction avec les règles élémentaires de sécurité, puisque la résistance de ces liens n'est pas adaptée pour recevoir la charge résultant du levage de tels fardeaux.

En conséquence, la manutention d'un fardeau doit être réalisée avec une élingue spécialement adaptée. Dans la mesure où il s'agit d'une élingue réutilisable, le coefficient de sécurité doit être de cinq, pour une manutention en atelier, et de six pour une manutention sur chantier. Cela signifie que l'élingue doit pouvoir résister à des charges d'une valeur respectivement cinq fois et six fois plus élevée que la valeur de la charge résultant de la manutention du fardeau.

Dans le cas où une élingue est à utilisation unique, ce coefficient de sécurité peut être réduit.

Toutefois, il n'existe pas de solution permettant de s'assurer qu'une élingue, théoriquement destinée à un usage unique, ne soit pas utilisée plusieurs fois. En effet, les dispositifs actuellement connus visent à éviter l'ouverture d'une élingue par un élément rapporté sur celle-ci, après que l'élingue ait été placée autour du fardeau. Cependant, il suffit de ne pas mettre en place cet élément de sécurité pour que l'élingue, théoriquement à usage unique, puisse être réutilisée, avec les risques de rupture accidentels que cela entraîne.

Le but de l'invention est de fournir une élingue qui permette de réaliser à la fois le fardelage d'éléments allongés, c'est-à-dire le regroupement de ceux-ci sous la forme d'un fardeau, et qui forme également une élingue à usage unique, le caractère unique de l'utilisation étant assuré par la structure de l'élingue.

A cet effet, l'élingue qu'elle concerne, comprend :
- un câble, à une extrémité duquel est ménagée une boucle, et à l'autre extrémité duquel est fixé une pièce d'insertion ;
- et une pièce de verrouillage comportant un trou traversant ou une gorge permettant son engagement sur le câble et son libre coulissement sur celui-ci, et une encoche qui, débouchant, d'une part, dans l'une de ses faces latérales sur toute la largeur ou longueur de celle-ci, par une fente de largeur au moins égale au diamètre du câble et, d'autre part, dans le trou traversant ou dans la gorge, comporte une section correspondant sensiblement à la section de la pièce d'insertion fixée à une extrémité du câble.

Le câble de l'élingue est entouré autour des éléments constitutifs du fardeau à réaliser, la pièce de verrouillage étant déplacée le long du câble, de telle sorte que la distance entre celle-ci et la pièce d'insertion, telle qu'un manchon serti à une extrémité du câble, corresponde sensiblement à la circonférence du fardeau. Le câble, à proximité de son extrémité comportant cette pièce d'insertion, est introd uit latéralement dans l'encoche que comporte la pièce de verrouillage, après quoi, il est exercé une traction sur le câble pour faire pénétrer la pièce d'insertion à l'intérieur de cette encoche. Au cours de son mouvement de pénétration à l'intérieur de l'encoche, la pièce d'insertion vient prendre appui contre la partie du câble située au niveau du trou traversant de la pièce de verrouillage. La manipulation de l'élingue et du fardeau qui lui est associé se fait par l'intermédiaire de la boucle ménagée à l'une des extrémités du câble. Lorsqu'une traction est exercée sur cette boucle, la force exercée sur le câble se traduit par une pénétration de plus en plus importante d'une face latérale de la pièce d'insertion fixée à l'extrémité du câble dans la partie du câble située au niveau du trou traversant. Il en résulte que, lorsque le fardeau a été reposé au sol, il n'est plus possible de ressortir la pièce d'insertion de l'encoche de la pièce de verrouillage, de telle sorte que la seule solution pour désolidariser l'élingue du fardeau, consiste à couper le câble, ce qui rend toute utilisation postérieure de l'élingue impossible.

D'autres caractéristiques et avantages de l'invention résultent du contenu des revendications 2 à 11.

C'est ainsi notamment que l'axe de l'encoche peut être droit, ou présenter un changement de direction à proximité de sa zone d'intersection avec le trou traversant servant au passage du câble. L'encoche peut posséder ou non une section constante sur toute sa longueur, étant susceptible dans ce dernier cas de posséder un profil de forme générale courbe. L'encoche peut être constituée par deux parties tronconiques successives, dont les extrémités de plus petite section sont situées au changement de direction de l'axe. L'encoche peut également posséder une configuration symétrique par rapport à l'axe du trou traversant, permettant l'introduction de la pièce d'insertion, indifféremment par l'une ou l'autre des extrémités de l'encoche. Afin de favoriser la tenue de la pièce d'insertion, et d'éviter le retrait de celle-ci hors de la pièce de verrouillage, la pièce d'insertion et la pièce de verrouillage peuvent comporter des surfaces crantées résistant à l'extraction de la pièce d'insertion hors de la pièce de verrouillage.

La pièce d'insertion peut être cylindrique, conique ou tronconique.

De toute façon, l'invention sera bien comprise à l'aide de la description qui suit, en référence au dessin schématique annexé représentant, à titre d'exemples non limitatifs, plusieurs formes d'exécution de cette élingue :
Figure 1 est une vue en perspective de cette élingue en position de fermeture autour d'un fardeau qui a été grossièrement schématisé ;
Figure 2 est une vue de face de l'élingue en position d'ouverture ;
Figure 3 est une vue en perspective et à échelle agrandie de la pièce de verrouillage de l'élingue, ainsi que des parties du câble qui coopèrent avec celle-ci en position de fermeture de l'élingue ;
Figures 4 à 6 sont trois vues de côté d'une variante de la pièce de verrouillage ;
Figures 7 à 9 sont trois variantes des pièces de verrouillage correspondant respectivement à figures 4 à 6 ;
Figure 10 est une vue en perspective d'une autre forme d'exécution de cette élingue avant engagement de la pièce d'insertion dans la pièce de verrouillage ;
Figure 11 est une vue en coupe transversale du dispositif de figure 10 après engagement de la pièce d'insertion dans la pièce de verrouillage.

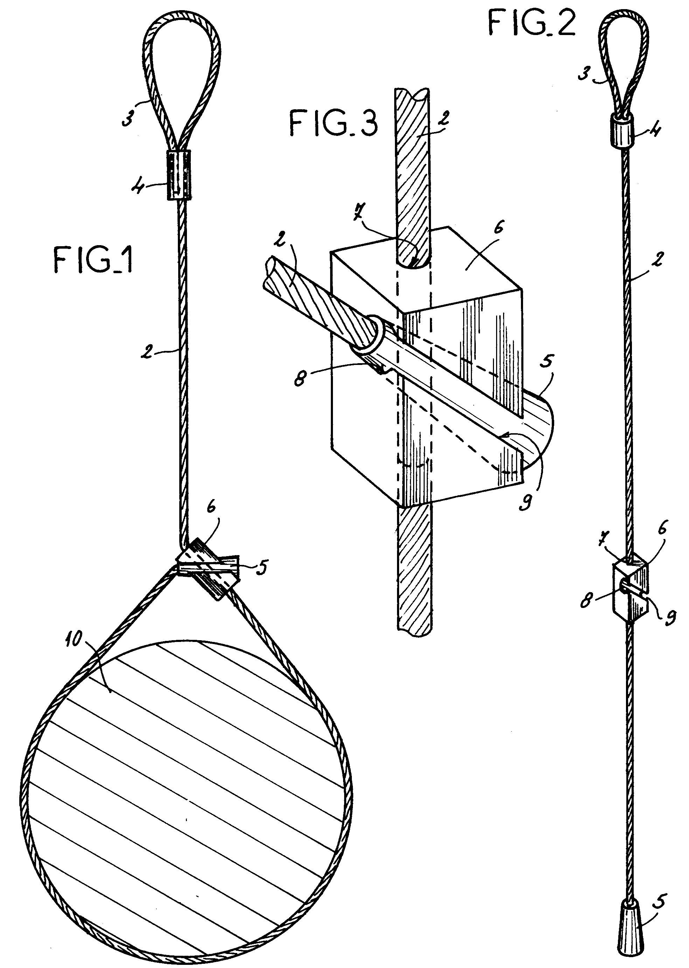

L'élingue représentée à la figure 1 comprend un câble 2, à une extrémité duquel est ménagée une boucle 3 obtenue par enroulement du câble sur lui-même, avec fermeture de la boucle par un manchon serti 4. A l'autre extrémité de ce câble est fixé un manchon serti 5, de forme tronconique, la section du manchon étant plus faible à son extrémité tournée du côté du milieu du câble qu'à son autre extrémité. Sur le câble 2 est montée, avant fixation du manchon 5, une pièce de verrouillage 6. Dans la forme d'exécution représentée au dessin, cette pièce possède une forme parallélépipédique. Toutefois, cette forme pourrait être différente. Cette pièce est réalisée en métal, ou en matière synthétique. Elle comprend un trou traversant 7 de part en part, permettant son engagement sur le câble 2 et son libre coulissement sur ce câble. A l'intérieur de la pièce de verrouillage 6 est ménagée une encoche 8 qui débouche dans l'une des faces latérales de la pièce, sur toute la largeur de cette face. Cette encoche débouche par une fente 9, dont la largeur est au moins égale au diamètre du câble 2, de manière à permettre une introduction latérale de celui-ci à l'intérieur de la pièce de verrouillage 6 par la fente 9. L'encoche 8 débouche également dans le trou traversant 7. En outre, la section de cette encoche correspond sensiblement à la section du manchon 5 serti à l'une des extrémités du câble, pour permettre l'engagement de ce manchon, de la droite vers la gauche, dans la forme d'exécution représentée au dessin.

Comme montré notamment à la figure 2, l'axe de l'encoche 8 forme un angle avec l'axe du trou traversant 7, cet angle étant de l'ordre de 45°. En outre, l'encoche est conformée de telle sorte que son extrémité, située à droite au dessin, destinée à recevoir l'extrémité libre du manchon, soit située du même côté que l'extrémité, située en bas au dessin, du trou traversant pour le passage du câble, tournée du côté de l'extrémité du câble équipée du manchon 5.

En pratique, un fardeau de pièces désigné par la référence 10 au dessin est entouré par le câble, notamment à partir de l'extrémité de celui-ci comportant le manchon 5. La pièce de verrouillage est déplacée le long du câble de telle sorte que sa distance du manchon 5 corresponde sensiblement à la circonférence du fardeau. Le câble 2 est engagé par la fente 9 dans l'encoche 8, à proximité du manchon serti 5, après quoi, est exercée une traction sur le câble pour engager le manchon 5 à l'intérieur de l'encoche 8 et l'amener dans la position représentée aux figures 1 et 3. Au cours de ce mouvement, le manchon 5 vient prendre appui avec une pression élevée contre la partie du câble située dans le trou traversant 7, réalisant un verrouillage. Plus la traction exercée sur le câble est importante, phénomène qui se produit lorsque le fardeau est levé, plus le manchon 5 vient "s'imprimer" dans la partie du câble traversant le trou 7. Dans ces conditions, après manipulation du fardeau, le démontage est impossible dans des conditions normales, de telle sorte que la seule solution pour retirer l'élingue consiste à couper le câble au niveau de la boucle qu'il forme autour du fardeau 10.

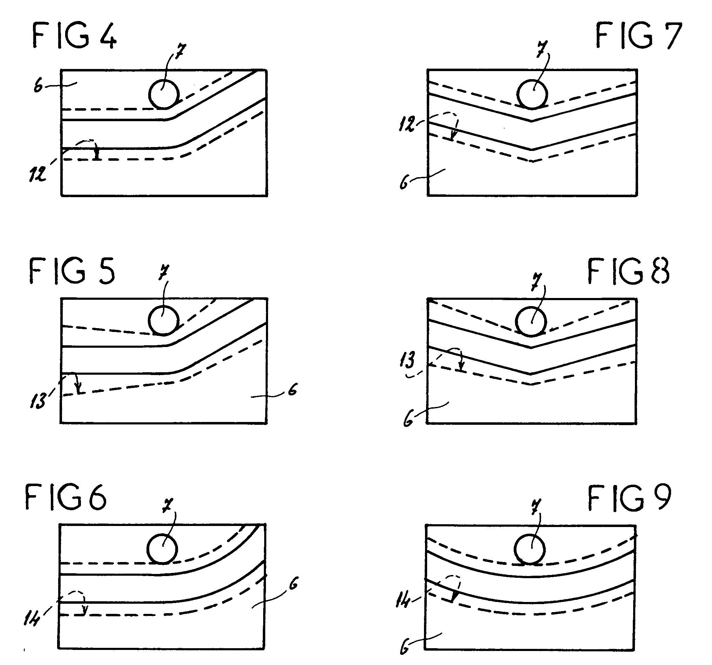

Les figures 4 à 7 représentent trois variantes d'exécution du dispositif de figures 1 à 3, dans lesquelles les mêmes éléments sont désignés par les mêmes références que précédemment.

Dans les trois cas, l'axe de l'encoche respectivement 12, 13, 14 présente un changement de direction à proximité de sa zone d'intersection avec le trou traversant 7 servant au passage du câble 2.

Dans la forme d'exécution représentée à la figure 4, l'encoche 12 possède une section sensiblement constante, et s'étend suivant deux tronçons rectilignes.

Dans la forme d'exécution représentée à la figure 5, l'encoche 13 est constituée par deux parties tronconiques successives, dont les extrémités de plus petite section sont situées au changement de direction de l'axe.

Dans la forme d'exécution représentée à la figure 6, l'encoche 14 possède une section sensiblement constante sur toute sa longueur et présente un profil de forme générale courbe.

Les figures 7 à 9 sont trois variantes respectivement des figures 4 à 6, dans lesquelles l'encoche possède une configuration symétrique par rapport à l'axe du trou traversant, permettant l'introduction de la pièce d'insertion, non représentée à ces figures, indifféremment par l'une ou l'autre des extrémités de l'encoche.

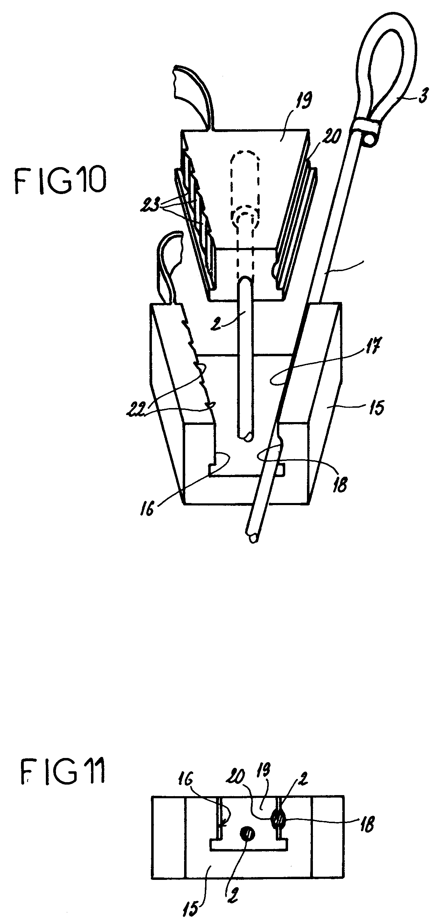

Les figures 10 et 11 représentent une variante d'exécution de cette élingue, dans laquelle la pièce de verrouillage 15 comprend une encoche 16 débouchant, dans l'une des faces latérales de la pièce de verrouillage par une fente 17. Une gorge 18, de même orientation générale que l'encoche, est ménagée dans l'une des parois délimitant celle-ci. Pour sa part, la pièce d'insertion 19, fixée à une extrémité du câble 2, comporte une gorge 20 complémentaire de celle 18 servant avec celle-ci au passage du câble 2. Comme montré au dessin, la pièce de verrouillage et la pièce d'insertion comportent toutes les deux des crans 22, 23 complémentaires, s'opposant au retrait de la pièce d'insertion hors de la pièce de verrouillage, après engagement de l'une dans l'autre.

Comme il ressort de ce qui précède, l'invention apporte une grande amélioration à la technique existante en fournissant une élingue de conception simple, permettant sa fermeture autour d'un fardeau sans nécessiter de pièce annexe, ni un outillage spécifique, et assurant une sécurité totale de la fermeture, puisque l'élingue ne peut plus être retirée qu'après destruction.

## Revendications

1. Elingue à usage unique pour le fardelage et la manipulation d'éléments allongés, caractérisée en ce qu'elle comprend :
- un câble (2), à une extrémité duquel est ménagée une boucle (3), et à l'autre extrémité duquel est fixé une pièce d'insertion (5, 19) ;
- et une pièce de verrouillage (6) comportant un trou traversant (7) ou une gorge (18) permettant son engagement sur le câble (2) et son libre coulissement sur celui-ci, et une encoche (8, 16) qui, débouchant, d'une part, dans l'une de ses faces latérales sur toute la largeur ou longueur de celle-ci, par une fente (9, 17) de largeur au moins égale au diamètre du câble (2) et, d'autre part, dans le trou traversant (7) ou dans la gorge (18), comporte une section correspondant sensiblement à la section de la pièce d'insertion (5, 19) fixée à une extrémité du câble (2).

2. Elingue selon la revendication 1, caractérisée en ce que l'axe de l'encoche (8) débouchant dans l'une des faces de la pièce de verrouillage (6) forme un angle avec l'axe du trou traversant (7) destinée au passage du câble.

3. Elingue selon la revendication 2, caractérisée en ce que l'angle formé par l'axe de l'encoche (8) débouchant dans l'une des faces de la pièce de verrouillage (6) et l'axe du trou traversant (7), est de l'ordre de 45°, et l'encoche (8) est conformée de telle sorte que son extrémité destinée à recevoir l'extrémité libre du manchon (5) soit située du même côté que l'extrémité du trou traversant (7) pour le passage du câble, tournée du côté de l'extrémité de celui-ci équipée du manchon (5).

4. Elingue selon l'une des revendications 1 à 3, caractérisée en ce que la pièce d'insertion (5) fixée à une extrémité du câble (2) possède une forme générale tronconique, son extrémité tournée du côté du milieu du câble possédant une plus petite section que son extrémité tournée vers l'extérieur.

5. Elingue selon la revendication 1, caractérisée en ce que l'axe de l'encoche (12, 13, 14) présente un changement de direction à proximité de sa zone d'intersection avec le trou traversant (7) servant au passage du câble (2).

6. Elingue selon la revendication 5, caractérisée en ce que l'encoche (12, 14) possède une section constante sur toute sa longueur.

7. Elingue selon la revendication 6, caractérisée en ce que l'encoche (12, 14) possède un profil de forme générale courbe.

8. Elingue selon la revendication 5, caractérisée en ce que l'encoche (13) est constituée par deux parties tronconiques successives, dont les extrémités de plus petite section sont situées au changement de direction de l'axe.

9. Elingue selon l'une quelconque des revendications 5 à 8, caractérisée en ce que l'encoche (12, 13, 14) possède une configuration symétrique par rapport à l'axe du trou traversant, permettant l'introduction de la pièce d'insertion indifféremment par l'une ou l'autre des extrémités de l'encoche.

10. Elingue selon la revendication 1, caractérisée en ce que la pièce de verrouillage (15) comprend une encoche (16) débouchant dans l'une de ses faces latérales par une fente (17), une gorge (18) de même orientation générale que l'encoche (16) étant ménagée dans l'une des parois délimitant l'encoche ménageant, en combinaison avec une gorge complémentaire (20) ménagée dans la pièce d'insertion (19), un passage pour le câble (2).

11. Elingue selon l'une quelconque des revendications 1 à 10, caractérisée en ce que la pièce d'insertion (19) et la pièce de verrouillage (15) comportent des surfaces crantées (23, 22) résistant à l'extraction de la pièce d'insertion hors de la pièce de verrouillage.
